# EUROPÄISCHE PATENTSCHRIFT

(11) **EP 3 761 003 B1**
(45) Veröffentlichungstag und Bekanntmachung des Hinweises auf die Patenterteilung: **30.10.2024**
(21) Anmeldenummer: 20185891.7
(22) Anmeldetag: 03.11.2017
(51) Int. Cl.: G01N 15/02, G01N 21/64

(54) **VERFAHREN ZUM MESSEN DER KONZENTRATION, DER GRÖSSE UND DES ZETAPOTENTIALS VON NANOPARTIKELN IN FLÜSSIGKEITEN IM STREULICHTMODUS UND IM FLUORESZENZMODUS**
METHOD FOR MEASURING CONCENTRATION, SIZE AND ZETA POTENTIAL OF NANOPARTICLES IN LIQUIDS IN SCATTERING MODE AND FLUORESCENCE MODE
PROCÉDÉ DE MESURE DE LA CONCENTRATION, DE LA TAILLE ET DU POTENTIEL ZÊTA DES NANOPARTICULES DANS DES LIQUIDES EN MODE LUMIÈRE DIFFUSE ET EN MODE FLUORESCENCE

(30) Priorität: 07.11.2016 DE 102016013236
(43) Veröffentlichungstag der Anmeldung: 06.01.2021
(62) Teilanmeldung aus: 17811180.3
(73) Patentinhaber: Particle Metrix GmbH, 82266 Inning a. Ammersee (DE)
(72) Erfinder: WACHERNIG, Hanno, 86911 Dießen a.A. (DE); BÖCK, Margret, 40668 Meerbusch (DE)
(74) Vertreter: Weickmann & Weickmann PartmbB

(56) Entgegenhaltungen:
- WO-A1-2011/051134
- WO-A1-2015/176698
- WO-A1-99/45385
- US-A1- 2007 103 687
- US-A1- 2014 226 158

## Beschreibung

Die Erfindung betrifft ein Verfahren zum Messen der Konzentration, der Größe und des Zetapotentials von Nanopartikeln in Flüssigkeiten im Streulichtmodus ind im Fluoreszenzmodus.

Die Auswertung erfolgt durch heterodyne DLS ( Dynamische Lichtstreuung, ISO 22412). Suspensionen und Emulsionen als disperse Stoffsysteme sind häufig vorkommende Formen von Partikeln in Flüssigkeiten. Die Anwendungen reichen von der Druckertinte über kosmetische Emulsionen bis hin zu pharmazeutischen Verabreichungen. Disperse Systeme sind bekanntermaßen den thermodynamisch instabilen Systemen zuzuordnen. Die Zeitdauer, in der solche Dispersionen stabil bleiben, ist für die Anwendbarkeit von wesentlicher Bedeutung. Eine sehr oft zu beobachtende Instabilität entsteht durch Koagulation von Teilchen die zu irreversiblem Partikelgrößenwachstum bzw. zu völliger Trennung zwischen flüssiger Phase und Partikelphase führen kann. Zur Verhinderung der Koagulation dienen mehrere Vorkehrungen. Eine davon ist die elektrostatische Stabilisierung. Dabei macht man sich zunutze, dass die Annäherung gleichsinnig geladener Teilchen durch deren elektrostatische Abstoßung erschwert wird. Die Abstoßung ist umso effizienter, je höher die ionische Ladung der Teilchen auf ihrer Grenzfläche zum Medium ist.

Maßgebend hierfür ist das elektrostatische Partikel-Grenzflächenpotential, meist Zetapotential genannt. Dieses Zetapotential wird als ein Maß angesehen, das den Grad der Abstoßung zwischen benachbarten Partikeln bestimmt. Es hat somit Bedeutung hinsichtlich der Stabilität disperser Systeme.

Es gibt verschiedene physikalische Methoden, das Zetapotential zu messen. Ein bekanntes Verfahren ist die klassische Elektrophorese unter dem Mikroskop, insbesondere unter dem Streulichtmikroskop in 90° Anordnung von Laser- und Mikroskopachse in der Elektrophorese-Messanordnung. In der Elektrophorese-Messanordnung werden die Partikel in ein elektrisches Feld gebracht. Je stärker das Zetapotential der Partikel, umso schneller bewegen sie sich im angelegten Feld. Die Messgröße ist die elektrophoretische Beweglichkeit µe, die nichts anderes ist als die gemessene Geschwindigkeit v dividiert durch das angelegte elektrische Feld E.

Diese µe wird umgerechnet in ein Zetapotential. Diese Elektrophorese-Anordnung ist beliebt, wenn man die Partikel-Elektrophoresebewegung direkt im Video beobachten und dadurch auch mögliche Störeffekte wie Konvektion erkennen kann. Die Filme werden automatisch nach der Geschwindigkeitsverteilung der Partikel ausgewertet. Durch den Einsatz scharf fokussierbarer Laser wurde die untere Messgrenze von 1 µm Partikelgröße bis auf 0,02 µm herabgesetzt. Dies gilt gleichermaßen für die Brown'sche Bewegung der Teilchen, die mit derselben Vorrichtung beobachtet wird und aus der die Partikelgröße abgeleitet werden kann.

Aus der Druckschrift US 2014/226158 A1 ist ein Verfahren zur Bestimmung von Informationen über ein Partikel mittels einer Lichtquelle, verschiedenen Lichtsystemen und einer Messzelle bekannt.

Aus der Druckschrift WO2015/176698 A1 ist ein Verfahren und eine Vorrichtung zur Erfassung und Charakterisierung von Partikeln in Flüssigkeiten aller Art in der Größenordnung von Nanometern bekannt. Die hierbei verwendete optische Streulichtanalyse ist im Gegensatz zur optischen Mikroskopie und der Elektronenmikroskopie ein indirektes Messverfahren zur Charakterisierung der Partikelgröße. Sie wird verwendet weil Partikel von weniger als 1µm (1000nm) wegen der Beugungsbegrenzung der direkten Beobachtung entgehen.

Der Erfindung liegt die Aufgabe zugrunde, ein Verfahren zum Messen der Konzentration, der Größe und des Zetapotentials von Nanopartikeln in Flüssigkeiten im Streulichtmodus und im Fluoreszenzmodus anzugeben.

Diese Aufgabe wird durch die Maßnahmen des Patentanspruchs 1 gelöst.

In dem Unteranspruch ist eine weitere vorteilhafte Ausgestaltung der Erfindung gekennzeichnet.

Die erfindungsgemäße Verfahren wird im Folgenden näher beschrieben.

Es zeigen im Einzelnen:
Fig. 1 eine Darstellung einer herkömmlichen NTA Nanopartikeltracking-Methode,
Fig. 2 eine Darstellung einer verbesserten Version der in der Fig. 1 gezeigten Methode, und
Fig.3: eine Darstellung einer erfindungsgemäßen Vorrichtung zur Messung der Konzentrationsbestimmung und der Größenordnung von Nanopartikeln im Streulichtmodus und im Fluoreszenzmodus.

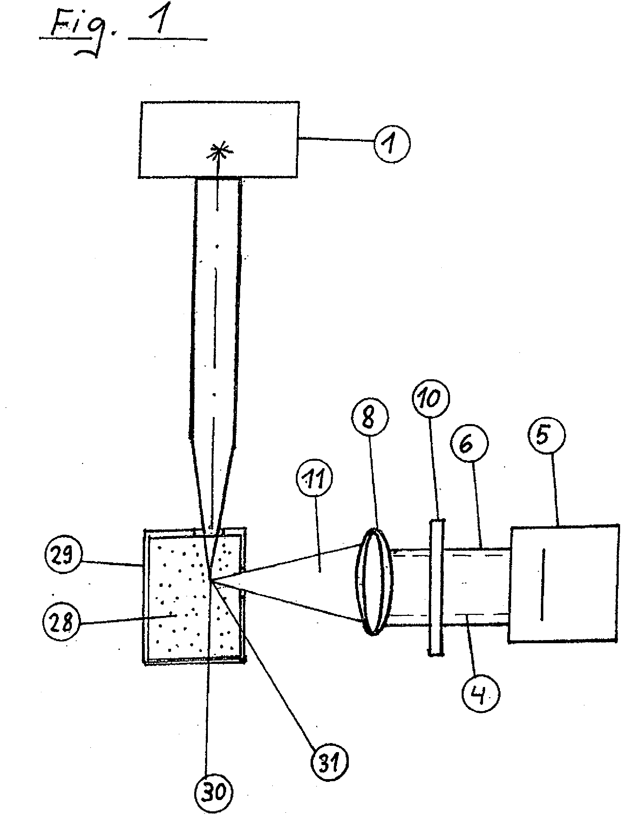

Fig. 1 zeigt eine Darstellung der Particle Metrix eigenen PTA Nanopartikeltracking -Messanordnung gemäß dem Stand der Technik.

In der PTA besteht die abbildende Optik aus dem Objektiv 6, das auf die partikuläre Probe 28 in der Messzelle 29 gerichtet ist und einer Video-Kamera, welche die Bewegung der Partikel aufnimmt. Der Laser 1 als anregende Lichtquelle für Streulicht und Fluoreszenzlicht strahlt meist im Winkel von 90 Grad dazu ein. An der Kamera 5, bzw. einem Detektor, werden dabei gleichzeitig Streulicht von der Streulicht-Ebene 31 und Licht von der Fluoreszenz-Ebene 30 über den Strahlengang 11 durch eine Flüssigkeits-Linse 8, bzw. einer motorisch verstellbaren Linse 8, mit einstellbarem Fokus nach dem Durchgang durch ein Fluoreszenz-Filter 10 über einen Strahlengang 4 registriert.

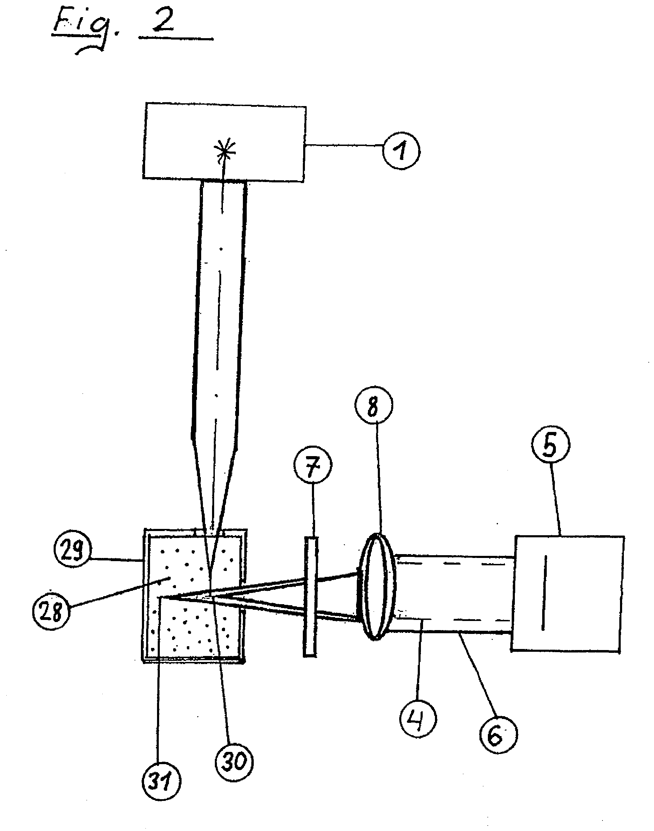

Sowohl Streulicht als auch Fluoreszenzlicht werden von denselben Partikeln gleichzeitig ausgesendet, wobei das Streulicht immer eine hohe Intensität aufweist. Hierbei ergibt sich das Problem, dass das um Größenordnungen schwächere Fluoreszenzlicht durch ein optisches Kantenfilter vom viel stärkeren Streulichtsignal getrennt werden muss. Wegen der notwendigen Auflösung und der hohen Empfindlichkeiten werden hierbei Schwarz - Weiß - Kameras, bzw. Grauwert messende Detektoren verwendet, welche die Farbe der Fluoreszenz nicht von der Farbe des Streulichts unterscheiden können. Das Filter hat die Aufgabe Streulicht, das von den Partikeln herrührt und parasitäres Streulicht, das durch eine unbeabsichtigte Wechselwirkung des Lasers mit der Apparatur auf dem Detektor landen kann, eindeutig abzublocken. Die abblockende Wirkung eines solchen Filters ( LWP = ( long wave pass ) zu erhöhen geling mit einer Vorrichtung nach der Fig.2.

Die Fih. 2 zeigt eine Darstellung einer verbesserten Version der in der Fig. 1 gezeigten Aordnung. Diese Darstellung entspricht in vielen Teilen der Abbildung in der Eig. 1. So besteht auch in diesem Fall die abbildende Optik aus dem Objektiv 6 das auf die partikuläre Probe 28 in der Messzelle 29 gerichtet ist und einer Video - Kamera, bzw. einem Detektor, der die Partikel aufnimmt. Der Laser 1 ist auch hier die anregende Lichtquelle für Fluoreszenzlicht und Streulicht. An der Kamera 5 werden dabei gleichzeitig Streulicht von der Streulicht - Ebene 31 und Licht von der Fluoreszenz - Ebene 30 durch eine Flüssigkeits- Linse 8, bzw. einer motorisch verstellbaren Linse 8, über einen, nicht näher bezeichneten, Strahlengang registriert. Der Unterschied zwischen den beiden Darstellungen liegt jedoch darin, dass das Fluoreszenz - Filter 7 im konvergenten Strahlengang zwischen der Flüssigkeits - Linse 8, bzw. einer motorisch verstellbaren Lind 8, und der Probe 28 liegt und nicht im parallelen Strahlengang direkt vor der Video - Kamera 5 Denn in vielen Fällen reicht die Abschwächung des Filters nicht aus um das Streulicht vollständig zu unterdrücken. Durch die beschriebene Maßnahme verbessert sich die Situation um Größenordnungen. Liegt das Fluoreszenzfilter im konvergenten Strahlengang zwischen dem Objektiv und der Probe, liegt der Fokus des gestreuten Lichts ( beispielsweise 488 nm Wellenlänge) hinter dem Fokus des Fluoreszenzlichts ( beispielsweise 510 nm bis 560 nm Wellenlänge.

Wegen der Dispersion der Brechungseigenschaften des Filters gibt es zwei weit voneinander entfernte Brennpunkte, wobei der eine dem Streulicht zugeordnet ist und der andere dem Referenzlicht. Somit "schaut" die Optik des Objektivs entweder in den Streulichtfokus oder in den Fluoreszenzfokus. Dies führt zu einer Unterdrückung des Streulichts um mehrere Größenordnungen wenn die Optik auf Fluoreszenz eingestellt ist. Dies ist umso wichtiger, je schwächer die Fluoeszenzsignale sind.

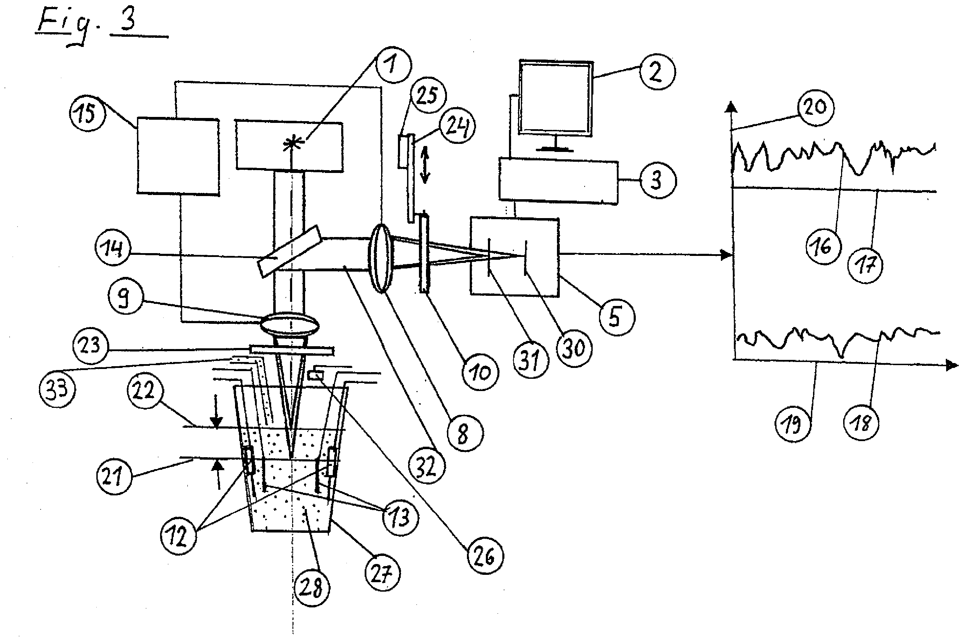

Die Fig.3: zeigt eine Darstellung einer Vorrichtung zur Bestimmung der Konzentration, Größenordnung und der Zetapotentialverteilunng von Nanopartikeln im Streulichtmodus und im Fluoreszenzmodus.

Wie in den vorherigen Darstellungen wird auch hier ein Laserstrahl 1 von oben in die Richtung einer Flüssigkeitsoberfläche gerichtet wird, die sich in einem Behälter, hier einem Probengefäß 27, befindet.

Diese Flüssigkeit wird vor einer Messung durch eine leichte Bewegung homogenisiert. Nachdem sich die Flüssigkeit beruhigt hat und der Behälter 27 in Richtung des Laserstrahls 1 geöffnet ist, kann eine Messung beginnen.

Der von oben gerichtete Laserstrahl 1 wird über einen Strahlenteil 14 durch eine Flüssigkeits - Linse, oder eine motorisch bewegte Linse, 9 mit einstellbarem Fokus und ein optisches Schutzglas 23 auf die Flüssigkeit gerichtet. Das Schutzglas 23 ist aus kratzfestem Material, wie Saphir oder Diamant, gefertigt. Die Flüssigkeits - Linse 9, bzw. eine motorisch verstellbare Lins 9, dient der optimalen Fokussierung auf einen Punkt knapp unterhalb der Phasengrenze zwischen Luft und Flüssigkeit. Der Fokus muss hierbei ca.0,1 mm bis 1 mm in der Flüssigkeit liegen. Die Brennweite der Flüssigkeits - Linse 9, bzw. einer motorisch verstellbaren Lins 9, ist mittels einer Optik - Steuerung 15 definiert verfahrbar.

Das durch die Flüssigkeitsoberfläche 22 und durch das optische Schutzglas 23 zurück reflektierte Licht wird zum Teil durch den Strahlungsteiler 14 auf einen Detektor 5 gelenkt, wobei eine weitere Flüssigkeits - Linse 8, bzw. eine motorisch verstellbare Linse 8, der Fokussierung auf den Detektor 5 dient.

Der Strahlenteiler 14 ist nicht genau im 45 - Winkel angebracht, sodass teilreflektiertes Laserlicht, vom Schutzfenster 23 stammend, nicht in den emittierenden Laser 1 einstrahlt, um unerwünschte Rückkoppplungseffekte am Laser zu vermeiden.

Die in der Probe 28 befindlichen Nano - Partikel streuen entsprechend der Brown'schen Bewegung in alle Richtungen. Diese Bewegung überträgt sich als zeitliche Fluktuation auf das Streulicht - Signal. Ein dem Raumwinkel um 180 Grad entsprechender Anteil des gestreuten Lichts gelangt über die Flüssigkeits - Linse 9 und den Strahlenteiler 14 auf den Detektor 5. An dem Detektor 5 sammelt sich also das an der Flüssigkeitsoberfläche 22, an der Flüssigkeits - Linse 9 und am optischen Schutz - Glas 23 teil - reflektierte Licht und das aus dem Inneren der Probe kommende Streulicht von den Partikeln.

Die Mischung des fluktuierenden Streulichts und des teil - reflektierten Laserlichts am selben Detektor 5 nennt man eine dynamische Lichtstreuung DLS der heterodynen Art. Diese Mischung wird bewirkt durch die 180 Grad Streulicht - Anordnung und kann als optische Verstärkung des schwachen Streulichtsignals durch den teilreflektierten Laser angesehen werden.

Durch eine so genannte Nullmessung, also mit einer Messung mit reiner Flüssigkeit ohne partikulären Inhalt, kann der Laseranteil 17 am Gesamtsignal 16 bestimmt werden. Im Streulichtanteil stecken die Informationen über die Konzentration und die Größenverteilung der Partikel.

Aus der Brown'schen Molekularbewegung wird über die bekannte DLS - Methode die Partikel - Größenverteilung berechnet. Hierzu muss die Viskosität der Probe der die Partikel umgebenden Flüssigkeit bekannt sein Diese Viskosität existiert für zwei Temperaturwerte für die verschiedensten Flüssigkeiten in Tabellenform. Zur Berechnung der über diese Temperaturwerte hinausgehenden Werte ist die Viskosität jeweils für den Fachmann mit einer einfachen Formel berechenbar. Mit Hilfe eines Thermistors, den Temperatur - Sensor 26, über dem Gefäß 27 wird die jeweilige Temperatur der elektronischen Steuerung 3 zur Berechnung der Viskosität übermittelt.

Zur Ergänzung der Bestimmung der Viskose besteht mittels einer Zugabe - Einrichtung 33 die Möglichkeit dosiert Referenz- Partikel in die Probe 28 zuzugeben. Hierbei handelt es sich um Standard - Partiikel einer bestimmten Größe, beispielsweise 100 nm. Diese Partikel schrumpfen oder quellen nicht. Ergibt sich bei der Messung eine Größenänderung kann man daraus Rückschlüsse auf die Viskosität ziehen.

Um die genaue Eindringtiefe des Laserstrahls in die Flüssigkeit zu bestimmen, wird die Flüssigkeits - Linse 9 so eingestellt, dass erst durch einen hellen Reflex des Laserstrahls an der Flüssigkeitsoberfläche 22 die Lage der Flüssigkeitsoberfläche genau bestimmt ist. Ausgehend von dieser Position der Flüssigkeits - Linse 9 wird diese so eingestellt, dass der Fokus auf einen genau bestimmten Abstand d zur Flüssigkeitsoberfläche in der Flüssigkeit zu liegen kommt. Für unterschiedliche Proben kann, falls notwendig, der Abstand d optimiert werden.

Der Abstand d ergibt sich aus der Differenz von 22 und 21.

Die Abbildungslinse, die Flüssigkeits - Linse 8 im Strahlengang 32, wird im Streulicht - Modus mit ihrem Brennpunkt auf den Detektor 5 abgebildet, wobei sich das Fluoreszenz - Filter 10 nicht im Strahlengang befindet.

Zur Messung der fluoreszierenden Partikel wird das Fluoreszenz - Filter in den Strahlengang vor dem Detektor 5 geschoben. Hierdurch verschiebt sich der Fluoreszenz - Fokus, bzw. die Fluoreszenzebene 30 entsprechend und wird mittels der Flüssigkeits - Linse 8 nachjustiert. Durch die unterschiedliche Lage des Fluoreszenz - Fokus und des Streulicht - Fokus, bzw. der Streulicht - Ebene 31 verstärkt sich die Filterwirkung jeweils nach der optischen Auslegung der Abbildungsoptik um Größenordnungen.

Das Fluoreszenz - Filter 10 wird mittels einer Schiebe - Einrichtung 24 und deren Antrieb 25 aus dem Strahlengang entfernt oder in den Strahlengang eingebracht. Der Unterschied der Intensitäten der jeweiligen Detektor - Signale 20 zwischen dem Streulichtanteil 16 am Signal und dem Floreszenz - Signal 18 ist in den Diagrammen auf der rechten Seite der Fig.3 über der Zeitachse 19 aufgetragen.

Die Vorrichtung wird mittels eines Touchscreen 2 und einem Display bedient
Bei den im Probengefäß 27 installierten Elektroden handelt es sich um Elektroporese - Elektroden 12 für ein gepulstes oder ein moduliertes Feld und um Feldabgriff - Elektroden 13 die der Messung des effektiven Feldes im Probenraum 28 dienen um daraus das Zeta - Potential zuverlässig berechnen zu können. Störende Effekte an den Elektroden 12 wie zum Beispiel Blasenbildung tragen damit nicht zur Bestimmung des elektrischen Feldes bei.

### Bezugszeichenliste

- 1: Laser
- 2: Display mit Touchscreen
- 3: Steuerung mit Partikel - Tracking - Programm
- 4: Strahlengang zwischen der Flüssigkeitslinse 8 und dem Detektor 5
- 5: Detektor, bzw. Videokamera
- 6: Objektiv
- 7: Fluoreszenz - Filter zwischen der Flüssigkeitslinse 8 und der Probe 28
- 8: Flüssigkeits - Linse mit einstellbarem Fokus
- 9: Flüssigkeits - Linse mit einstellbarem Fokus ( Laser )
- 10: Fluoreszenz - Filter zwischen dem Detektor 5 und der Linse 8
- 11: Strahlengang zwischen der Linse 8 und einer Probe 28
- 12: Elektrophorese - Elektroden für gepulstes oder moduliertes Feld
- 13: Feldabgrif - Elektroden
- 14: Strahlenteiler ( Beamsplitter )
- 15: Optik - Steuerung
- 16: Streulichtanteil am Signal ( SS )
- 17: Laseranteil am Signal ( LS )
- 18: Fluoreszenz - Signal
- 19: Zeit - Linie
- 20: Detektor- Signal
- 21: Luft - Phasen - Grenze zwischen Luft und Flüssigkeit ( LF )
- 22: Oberfläche der Probe ( Flüssigkeits - Oberfläche )
- 23: Optisches Schutzgas
- 24: Schiebe - Einrichtung für das Fluoreszenz - Filter 10
- 25: Antrieb für die Schiebe - Einrichtung 24
- 26: Temperatur- Sensor
- 27: Probengefäß ( Eppendorf - Röhrchen )
- 28: Probe
- 29: Mess - Zelle
- 30: Fluoreszenz - Ebene ( FL )
- 31: Streulicht - Ebene
- 32: Strahlengang zwischen dem Strahlenteiler 14 und der Linse 8
- 33: Zugabe - Einrichtung für Reagenz - Partikel bei Viskose - Messung

## Patentansprüche

1. Verfahren zum Messen der Konzentration, der Größe und des Zetapotentials von Nanopartikeln in Flüssigkeiten im Streulichtmodus und im Fluoreszenzmodus, mit den folgenden Merkmalen:
a) eine Nanopartikel enthaltende flüssige Probe (28) in einem Probengefäß (27) wird mit einem Laserstrahl (1) über einen Strahlungsteiler (14), eine erste Flüssigkeits-Linse (9) mit einstellbarem Fokus und ein optisches Schutzglas (23) von oben bestrahlt,
wobei die Nanopartikel ein zeitlich fluktuierendes Streulicht aufgrund der Brown'schen Bewegung und die Probe-Flüssigkeitsoberfläche, die erste Flüssigkeits-Linse (9) und das optische Schutzglas (23) ein teil-reflektiertes Laserlicht erzeugen, das über denselben Strahlungsteiler (14) und eine zweite Flüssigkeits-Linse (8) mit einstellbarem Fokus auf einen Detektor (5) gelenkt wird,
b) zur Beobachtung des Fluoreszenzlichts wird in den konvergenten Strahlengang zwischen die zweite Flüssigkeits-Linse (8) und den Detektor (5) ein Fluoreszenz-Filter (10) zur Erhöhung eines Abstands der Brennpunkte zwischen einer Streulicht-Ebene (31) und einer Fluoreszenz-Ebene (30) geschaltet, wobei der Laseranteil (17) am Gesamtsignal (16) des zeitlich fluktuierenden Streulichts und des teil-reflektierten Laserlichts an dem Detektor (5) mit einer Messung mit einer Flüssigkeit ohne partikulärem Inhalt bestimmt wird,
wobei die Konzentration und Größe der Nanopartikel auf der Grundlage des Streulichtanteils am Gesamtsignal (16) des zeitlich fluktuierenden Streulichts und des teil-reflektierten Laserlichts an dem Detektor (5) ermittelt wird,
wobei das Zetapotential auf der Grundlage einer Elektrophorese, die mittels in dem Probengefäß (27) installierten ersten Elektroden (12) erzeugt wird, und eines störungsfreien elektrischen Feldes, das mittels in dem Probengefäß (27) installierten zweiter Elektroden (13) gemessen wird, ermittelt wird, und
wobei die Steuerung des Messvorgangs mit Hilfe eines heterodyn-180 Grad dynamische Lichtstreuung DLS-Programms, einer die Brennweite der ersten und zweiten Flüssigkeits-Linse (8, 9) verfahrbaren Optik-Steuerung (15) und einem Display (2) mit Touch-Screen durchgeführt wird.

2. Verfahren nach Anspruch 1, wobei
die Viskosität der Probe (28) mit Hilfe eines Temperatur-Sensors (26) ermittelt wird.

## Claims

1. Method for measuring the concentration, the size and the zeta potential of nanoparticles in liquids in the scattered light mode and in the fluorescence mode, comprising the following features:
a) a liquid sample (28) containing nanoparticles in a sample container (27) is irradiated from above with a laser beam (1) via a beam splitter (14), a first liquid lens (9) having an adjustable focus and an optical protection glass (23),
wherein the nanoparticles, due to the Brownian movement, generate a scattered light fluctuating over time, and the sample-liquid-surface, the first liquid lens (9) and the optical protection glass (23) generate a partly reflected laser light which is directed via the same beam splitter (14) and a second liquid lens (8) having an adjustable focus to a detector (5),
b) for observing the fluorescence light, a fluorescence filter (10) is inserted into the convergent beam path between the second liquid lens (8) and the detector (5) for increasing a distance of the focal points between a scattered-light-plane (31) and a fluorescence plane (30), wherein the laser proportion (17) as part of the overall signal (16) of the scattered light fluctuating over time and the partly-reflected laser light at the detector (5) is determined by means of a measurement with a liquid without particulate content,
wherein the concentration and the size of the nanoparticles is determined based on the proportion of the scattered light as part of the overall signal (16) of the scattered light fluctuating over time and the partly-reflected laser light at the detector (5),
wherein the zeta potential is determined based on an electrophoresis that is generated by means of first electrodes (12) installed in the sample container (27) and an undisturbed electrical field that is measured by means of second electrodes (13) installed in the sample container (27), and
wherein the control of the measurement process is performed with the help of a heterodyne 180 degree dynamic light scattering DLS program, an optics control (15) for changing the focal length of the first and the second liquid lens (8, 9), and a display (2) having a touch screen.

2. Method according to claim 1, wherein
the viscosity of the sample (28) is determined by means of a temperature sensor (26).

## Revendications

1. Procédure de mesure de la concentration, de la taille et du potentiel zêta de nanoparticules dans des liquides en mode de lumière diffusée et en mode de fluorescence, présentant les caractéristiques suivantes :
a) un échantillon liquide (28) contenant des nanoparticules dans un récipient d'échantillon (27) est irradié par le haut avec un faisceau laser (1) par l'intermédiaire d'un diviseur de faisceaux (14), d'une première lentille de liquide (9) à foyer réglable et d'un verre de protection optique (23),
dans lequel les nanoparticules produisent une lumière diffusée fluctuant dans le temps en raison du mouvement brownien et la surface de l'échantillon-liquide, la première lentille de liquide (9) et le verre de protection optique (23) produisent une lumière laser partiellement réfléchie qui est dirigée sur un détecteur (5) par l'intermédiaire du même diviseur de faisceaux (14) et d'une deuxième lentille de liquide (8) à foyer réglable,
b) pour l'observation de la lumière fluorescente, un filtre de fluorescence (10) est monté dans le trajet convergent des rayons entre la deuxième lentille de liquide (8) et le détecteur (5) pour augmenter une distance des points focaux entre un plan de lumière diffusée (31) et un plan de fluorescence (30), dans lequel la partie laser (17) du signal total (16) de la lumière diffusée fluctuant dans le temps et de la lumière laser partiellement réfléchie est déterminée au niveau du détecteur (5) par une mesure avec un liquide sans contenu particulaire,
dans lequel la concentration et la taille des nanoparticules sont déterminées sur la base de la proportion de lumière diffusée dans le signal total (16) de la lumière diffusée fluctuant dans le temps et de la lumière laser partiellement réfléchie au niveau du détecteur (5),
dans lequel le potentiel zêta est déterminé sur la base d'une électrophorèse produite au moyen de premières électrodes (12) installées dans le récipient d'échantillon (27) et d'un champ électrique sans interférence mesuré au moyen de secondes électrodes (13) installées dans le récipient d'échantillon (27), et
dans lequel la commande de l'opération de mesure est effectuée à l'aide d'un programme DLS de diffusion dynamique de la lumière à 180 degrés hétérodynes, d'une commande optique (15) pouvant déplacer la distance focale des première et deuxième lentilles de liquide (8, 9) et d'un afficheur (2) à écran tactile.

2. Procédé selon la revendication 1,
dans lequel la viscosité de l'échantillon (28) est déterminée à l'aide d'un capteur de température (26).
